# EUROPÄISCHE PATENTANMELDUNG

(11) **EP 2 716 692 A1**
(43) Veröffentlichungstag der Anmeldung: **09.04.2014**
(21) Anmeldenummer: 12187674.2
(22) Anmeldetag: 08.10.2012
(51) Int. Cl.: C08J 5/04, C08K 3/10, C08K 3/14, C08K 3/36, C08K 3/40

(54) **Verbundwerkstoffe zur Nutzung in Spritzguss-Verfahren**

(71) Anmelder: WKP Products SA, 6814 Cadempino (CH)
(72) Erfinder: Maikisch, Martin, 6822 Satteins (AT)
(74) Vertreter: Rentsch Partner AG

(57) **Zusammenfassung**

Ein Verbundwerkstoff mit polymerer Matrixkomponente und teilchenförmiger Füllkomponente umfasst 20-50 Vol.% eines thermoplastischen Polymers; 15-60 Vol.% einer ersten teilchenförmige Füllkomponente, wobei die genannte erste Füllkomponente ausgewählt ist aus der Gruppe bestehend aus pulverförmigen Metallen, Metalloxiden, kovalenten Carbiden, metallartigen Carbiden, oder Gemischen solcher Pulver; 5-30 Vol.% einer zweiten teilchenförmigen Füllkomponente, wobei die genannte zweite Füllkomponente ein anorganisches und/oder mineralisches Material in Pulverform ist; und 1-1 5 Vol.% eines Haftvermittlers.

## Beschreibung

### Gebiet der Technik

Die Erfindung betrifft Verbundwerkstoffe mit polymerer Matrix und anorganischen Füllstoffen.

### Stand der Technik

Zur kosteneffizienten Fertigung von Werkstücken aus Kunststoffen in Grossserien hat sich das Kunststoff-Spritzgussverfahren bewährt. Es erlaubt die Fertigung von Teilen mit hoher Genauigkeit und/oder mit hoher Produktionsrate. Mit geeigneten Spritzguss-Werkzeugen sind komplizierte Geometrien möglichen, und auch die Herstellung von Innengewinden und anderen hinterschnittenen Strukturen. Ebenfalls machbar ist die Herstellung von Komponenten aus verschiedenen Kunststoffarten in einem Arbeitsgang.

Die Festigkeit von im Spritzguss-Verfahren hergestellten Werkstücken ergibt sich aus der verwendeten Kunststoffzusammensetzung. Die verwendeten Kunststoffe müssen thermoplastisch sein, damit sie als flüssige Schmelze unter hohem Druck in die Spritzguss-Form eingebracht werden können, wo sie dann erstarren. Verwendet werden für Spritzguss beispielsweise die thermoplastischen Polymere Polypropylen PP, Polymethylmethacrylat PMMA, Polycarbonat PC, Polystyrol PS, Acrylnitril-Butadien-Styrol-Copolymer ABS, Polyamid PA, Polyoxymethylen POM, aber auch Polyester und Polyvinylchlorid PVC. Durch Beigabe geeigneter funktioneller Füllstoffe können die Eigenschaften von Kunststoffen, beispielsweise die Elastizität und mechanische Festigkeit, beeinflusst werden. Funktionelle Füllstoffe wie beispielsweise Glasfasern und Wollastonit dienen unter anderem zur Verbesserung der Steifigkeit und Biegefestigkeit von Polyestern, Polyamiden und Polypropylenen. Ebenso setzt man solche Füllstoffe bei duroplastischen Reaktionsharzen wie Epoxydharzen ein, um damit durch Schrumpf verursachte Spannungsrisse zu vermeiden.

Die Verwendung von Kunststoff-Komponenten kann aus verschiedenen Gründen für gewisse Anwendungen nicht möglich oder erwünscht sein. Beispielsweise kann die erreichbare mechanische Festigkeit von Kunststoff-Teilen für gewisse Anwendungen nicht ausreichend sein. In anderen Fällen, beispielsweise bei hochpreisigen Konsumprodukten, sind Kunststoff-Komponenten trotz vergleichbarer Eigenschaften nicht erwünscht, weil Konsumenten traditionell Kunststoffe mit Billig-Produkten in Verbindung bringen.

Metallische Werkstoffe haben gegenüber Kunststoffen verschiedene Vorteile. Für metallische Werkstoffe existieren verschiedene Verfahren für eine kosteneffiziente Produktion von Grossserien, beispielsweise das Druckguss-Verfahren. Bei diesem wird die flüssige Metallschmelze, beispielsweise Aluminium, Magnesium oder Zink, unter hohem Druck in eine mehrfach verwendbare Giessform gedrückt, wo sie erstarrt.

Durch die gegenüber dem Kunststoff-Spritzguss eingeschränkten Möglichkeiten bzgl. der Giessform ist die Herstellung aufwendig geformter Werkstücke mit Metall-Druckguss aufwendiger, da unter anderem mehr Nachbearbeitungsschritte notwendig sein können. Mit dem Druckguss-Verfahren ist beispielsweise die direkte Herstellung von Innengewinden nicht möglich, sondern es müssen entsprechende Stahlkerne eingegossen werden, die anschliessend in einem weiteren Arbeitsgang wieder entfernt werden.

Bekannt sind Epoxydharz-Präpolymere mit Metallpulver als Füllstoff (sog. "metall filled epoxies"). Die entstehenden Massen können als aushärtbares Material beispielsweise zur Reparatur von Metallwerkstücken oder zum Drucken von Leitern auf Platinen verwendet werden. Solche Epoxydharz-Werkstoffe sind jedoch Duroplaste, die für das Spritzguss-verfahren nicht geeignet sind.

Ebenfalls bekannt sind thermoplastische Polymere mit Metallpulver als Füllstoff. Diese weisen jedoch nur eine geringe mechanische Festigkeit auf. Anwendungsgebiete sind beispielsweise Rapid-Prototyping-Verfahren, bei welchen mit Aluminiumpulver gefülltes Polyamid schichtweise lasergesintert wird.

Bekannt sind auch Verbundwerkstoffe bestehend aus Hartferritpulver und duroplastischen oder thermoplastischen Polymeren, zur Herstellung von Permanentmagneten, die ebenfalls nur über eine vergleichsweise geringe mechanische Festigkeit verfügen.

Es besteht entsprechend das Bedürfnis, die Vorteile des Druckguss-Verfahrens und des Spritzguss-Verfahrens zu verbinden, bzw. solche Herstellungsverfahren für Metall zugänglich zu machen, für die Druckguss nicht möglich ist.

### Aufgabe der Erfindung

Aufgabe der Erfindung ist es, einen Werkstoff zur Verfügung zu stellen, der die oben erwähnten und andere Nachteile nicht aufweist. Insbesondere soll ein solcher Werkstoff mit dem Spritzguss-Verfahren verarbeitbar sein. Nach der Verarbeitung soll der Werkstoff möglichst metallähnliche Eigenschaften aufweisen, beispielsweise in Bezug auf die Festigkeit, die Leitfähigkeit, das spezifische Gewicht und das Aussehen.

Diese und andere Aufgaben werden gelöst durch erfindungsgemässen Verbundwerkstoffe, erfindungsgemässe Werkstücke und Halbfabrikate aus solchen erfindungsgemässen Verbundwerkstoffen, erfindungsgemässe Kits zur Herstellung solcher Verbundwerkstoffe, erfindungsgemässe Verwendungen solcher Verbundwerkstoffe, und erfindungsgemässe Verfahren zur Herstellung solcher Verbundwerkstoffe, gemäss den unabhängigen Ansprüchen. Weitere bevorzugte Ausführungsformen sind in den abhängigen Ansprüchen gegeben.

### Darstellung der Erfindung

Ein erfindungsgemässer Verbundwerkstoff mit polymerer Matrixkomponente und teilchenförmiger Füllkomponente umfasst 20-50 Vol.% eines thermoplastischen Polymers; 15-60 Vol.% einer ersten teilchenförmige Füllkomponente, wobei die genannte erste Füllkomponente ausgewählt ist aus der Gruppe bestehend aus pulverförmigen Metallen, Metalloxiden, kovalenten Carbiden, metallartigen Carbiden, oder Gemischen solcher Pulver; 5-30 Vol.% einer zweiten teilchenförmigen Füllkomponente, wobei die genannte zweite Füllkomponente ein anorganisches und/oder mineralisches Material in Pulverform ist; und 1-1 Vol.% eines Haftvermittlers.

Der Volumenanteil berechnet sich dabei aus dem Gewichtsanteil der jeweiligen Komponente ein einer bestimmten Zusammensetzung, geteilt durch die spezifische Dichte der Komponente.

Der Begriff "Metall" bezeichnet im Rahmen dieser Beschreibung sowohl reine Metalle als auch Legierungen von Metallen. Der Begriff "Polymer" bezeichnet sowohl reine Polymere als auch Copolymere und Polymerblends.

Vorteilhaft beträgt der Anteil des thermoplastischen Polymers 33-44 Vol.%, und/oder der Anteil der ersten Füllkomponente 29-51 Vol.%, und/oder der Anteil der zweiten Füllkomponente 8-21 Vol.%, und/oder der Anteil des Haftvermittlers 6-9 Vol.%.

In einer vorteilhaften Ausführung eines solchen erfindungsgemässen Verbundwerkstoffes enthält die erste Füllkomponente ein pulverförmiges Metall, ausgewählt aus der Gruppe bestehend aus Bronze, Messing, Kupfer, Eisen, Stahl, Zink, Magnesium, Aluminium, oder Gemischen solcher Pulver.

In einer anderen vorteilhaften Ausführung eines solchen erfindungsgemässen Verbundwerkstoffes enthält die erste Füllkomponente ein pulverförmiges Metall, ausgewählt aus der Gruppe bestehend aus Gold, Silber, Platin, Palladium, Wolfram, bzw. Legierungen, die solche Metalle enthalten, oder Gemischen solcher Pulver.

In einer weiteren vorteilhaften Ausführung eines solchen erfindungsgemässen Verbundwerkstoffes enthält die erste Füllkomponente ein ferromagnetisches Metalloxid in Pulverform.

In einem erfindungsgemässen Verbundwerkstoff ist die zweite Füllkomponente vorteilhaft ausgewählt aus der Gruppe bestehend aus Wollastonit, Glasfasern, kalzinierte Kieselerde, kalziniertes Kaolinit, oder Gemischen davon.

Das thermoplastische Polymer eines erfindungsgemässen Verbundwerkstoffes enthält vorteilhaft mindestens ein Polyamid und/oder Polyamid-Copolymer.

Vorteilhaft enthält ein erfindungsgemässer Verbundwerkstoff als Haftvermittler ein Gemisch aus einem Silan mit drei Alkoxyresten und einem Alkylrest mit Aminofunktionalität und einem Silan mit drei Alkoxyresten und einem Alkylrest mit Epoxyfunktionalität. Besonders vorteilhaft ist bei einer solchen Ausführungsvariante der Haftvermittler ein Gemisch aus 3-Aminopropyltriethoxysilan und 3-(2,3-epoxypropoxy)-propyltrimethoxysilan.

In einer anderen Ausführungsform eines erfindungsgemässen Verbundwerkstoffes enthält der Haftvermittler maleinsäureanhydrid-gepropftes Polyethylen oder maleinsäureanhydrid-gepropftes Polypropylen.

Vorteilhaft ist ein erfindungsgemässer Verbundwerkstoff pelletisiert. Dies erlaubt die einfache Verwendung in herkömmlichen Spritzguss-Anlagen.

Erfindungsgemässe Werkstücke und Halbfabrikate sind hergestellt aus solchen erfindungsgemässen Verbundwerkstoffen.

Ein erfindungsgemässes Kit zur Herstellung eines erfindungsgemässen Verbundwerkstoffs umfasst die einzelnen Komponenten des Verbundwerkstoffs in getrennter Form, und/oder in gemischter aber noch nicht verarbeiteter Form. Das heisst, einzelne Komponenten liegen als sortenreine Pulver vor, oder zwei oder mehr der Komponenten sind bereits vorgemischt, liegen also als Pulvermischung vor, bzw. als Mischung eines Pulvers und eines flüssigen Haftvermittlers. Ein solches Kit kann dann, gegebenenfalls nach Vormischen der Komponenten, direkt einem Kneter zugeführt werden, in welchem dann der erfindungsgemässe Verbundwerkstoff entsteht.

Bei einer erfindungsgemassen Verwendung wird ein erfindungsgemasser Verbundwerkstoff zur Herstellung von Werkstücken mit einem Spritzguss-Verfahren oder einem Blasform-Verfahren verwendet.

### Ausführung der Erfindung

Die im Folgenden gegebenen Beispiele dienen der besseren Veranschaulichung der Erfindung, sind jedoch nicht dazu geeignet, die Erfindung auf die hierin offenbarten Merkmale zu beschranken.

Nachfolgend werden verschiedene Ausführungsvarianten von Zusammensetzungen erfindungsgemasser Verbundwerkstoffe beschrieben, mit verschiedenen Anteilen der Komponenten. Die Beispiele wurden jeweils mit fünf verschiedenen Metallpulvern mit unterschiedlichen Partikel-Morphologien durchgeführt (vgl. Tabelle 1).

**Tabelle 1**

| *Typ Nr.* | *Art* | *Partikel-Morphologie* | *Partikelgrösse* | *Schüttdichte* |
|---|---|---|---|---|
| A | Bronze | kugelig | ca. 25 µm | ca. 5 g/cm³ |
| B | Bronze | spratzig | ca. 35 µm | ca. 3 g/cm³ |
| C | Messing | kugelig | ca. 65 µm, | ca. 3 g/cm³ |
| D | Kupfer | Blattchen | ca. 45 µm | ca. 1 g/cm³ |
| E | Kupfer | kugelig | ca. 50 µm | ca. 5 g/cm³ |

Kugelige und "spratzige" Partikelformen ergeben sich bei der Verdüsung von Metallschmelzen, wobei die Partikelform von der Metallart und den Verdüsungsbedingungen abhangen. Blattchenformige Partikel bildet sich bei Vermahlung in einer Kugelmühle. Entsprechende Metallpulver werden beispielsweise von der Firma Carl Schlenk AG, DE-91154 Roth, angeboten, unter den Bezeichnungen Rogal Kupferpulver GK, Cubrotec, Rogal Bronzepulver GS, Rogal Bronzepulver GK, Rogal Messingpulver GS.

### Beispiel 1

In einem ersten Ausführungsbeispiel wurden für fünf erfindungsgemässe Verbundwerkstoffe 1.A, 1.B, 1.C, 1.D, 1.E folgende Zusammensetzungen eingesetzt: 10 Gew.% Polyamid PA 12 als Polymerkomponente, 80 Gew.% Metallpulver A, B, C, D, oder E gemäss Tabelle 1 (der Buchstabe des jeweiligen Werkstoffs kennzeichnet dabei das verwendete Metallpulver) als erste Füllkomponente, 8 Gew.% Wollastonit mit einer Faserlänge von ca. 250 µm und einem Faserdurchmesser ca. 15 µm als zweite Füllkomponente, und 2 Gew.% einer Haftvermittlerkomponente, bestehend aus 3-Aminopropyltriethoxysilan und 3-(2,3-epoxypropoxy)propyltrimethoxysilan in einem Gewichtsverhältnis von 1:1.

Polyamid PA 12 ist ein thermoplastisches Polymer aus 12-Aminododecansäure-Monomeren. Es ist seit langem bekannt und von diversen Herstellern erhältlich, beispielsweise von der Firma Evonik Industries AG, DE 45128 Essen, unter der Typenbezeichnung Vestamid® L1670.

Wollastonit ist ein natürlich vorkommendes Calciumsilikat-Mineral mit faserigen bis nadeligen Kristallen, das als funktioneller Füllstoff in thermoplastischen Polymeren eingesetzt wird, um die Kriechfestigkeit, die Steifigkeit und die Biegefestigkeit von Thermoplast-Werkstoffen zu verbessern. Wollastonit wird von verschiedenen Herstellern angeboten, beispielsweise von der Firma Fibertec Inc., Bridgewater, MA 02324, USA.

3-Aminopropyltriethoxysilan (APTES, CAS Nr. 13822-56-5) wird zur Oberflächenbehandlung von Wollastonit als Füllstoff für Polyamide eingesetzt, um eine chemische Bindung zwischen den Wollastonit-Partikeln und der umgebenden Polymer-Matrix zu erreichen, und damit eine erhöhte Festigkeit. Das Produkt ist beispielsweise erhältlich von der Firma Jingzhou Jianghan Fine Chemical Co. Ltd, Hubei, 434005, China, unter der Typenbezeichnung JH-A110. und 3-Aminopropylmethyldiethoxysilane sind alternativ ebenfalls verwendbar. Alternativ sind andere Aminosilane wie beispielsweise 3-Aminopropyltrimethoxysilan, N-(2-aminoethyl)-3-aminopropyltrimethoxysilan, N-(2-aminoethyl)-3-aminopropyltriethoxysilan, 3-Ureidopropyltriethoxysilan, N-(2-aminoethyl)-3-aminopropylmethyldimethoxysilan und 3-Aminopropylmethyldiethoxysilan ebenfalls verwendbar.

3-(2,3-Epoxypropoxy)-propyl-trimethoxysilan (GPTMS, 3-Glycidoxypropyltrimethoxysilan, CAS Nr. 2530-83-8) wird ebenfalls zur Oberflächenbehandlung von Wollastonit eingesetzt. Das Produkt ist beispielsweise erhältlich von der Firma Jingzhou Jianghan Fine Chemical Co. Ltd, Hubei, 434005, China, unter der Typenbezeichnung JH-O187.

Die einzelnen Bestandteile der Zusammensetzungen wurden in der üblichen Weise gemischt und pelletisiert. Vorzugsweise wird dazu in einem ersten Schritt das Wollastonit mit der Haftvermittler-Komponente gemischt. Das entstehende Granulat kann anschliessend in einer herkömmlichen Spritzguss-Anlage verarbeitet werden.

Die genannten vorteilhaften Werkstoffe erlauben es, Komponenten im Spritzgussverfahren herzustellen, also mit den entsprechenden vorteilhaften Möglichkeiten bzgl. Geometrie, Präzision und Stückkosten. Gleichzeitig haben die Werkstücke metallähnliche Eigenschaften, beispielsweise in Bezug auf das spezifische Gewicht, das optische Aussehen, die elektrische Leitfähigkeit und die Wärmeleitfähigkeit. Auch die Haptik des Werkstoffs ist metallähnlich, da sich die Werkstücke kühl anfühlen.

Die entstehenden Werkstücke erreichen trotz ihres geringen Polymeranteils die mechanischen Eigenschaften von Werkstücken aus herkömmlichen Polyamid-Werkstoffen. Der negative Einfluss des hohen Füllgrades auf die mechanische Festigkeit, wie er bei den aus dem Stand der Technik bekannten Polymeren mit metallischen Füllstoffen bekannt ist, tritt bei den genannten vorteilhaften Zusammensetzungen erfindungsgemässer Verbundwerkstoffe nicht auf.

Ohne sich auf ein konkretes Funktionsprinzip einschränken zu wollen, wird angenommen, dass sich diese vorteilhaften mechanischen Eigenschaft der erfindungsgemässen Werkstoffe daraus ergeben, dass die Partikel der zwei verschiedenen Füllkomponenten, im vorliegenden Fall des Metallspulvers und des Wollastonits, durch die zwei Haftvermittler chemisch vernetzt werden. Das Silan-Ende von 3-Aminopropyltriethoxysilan und von 3-(2,3-epoxypropoxy)-propyltrimethoxysilan bindet an die siliziumhaltige mineralische Struktur der Wollastonit-Partikel. Das Epoxy-Ende von 3-(2,3-epoxypropoxy)-propyltrimethoxysilan bindet an die Oberfläche der Metallpartikel, während das Amino-Ende von 3-Aminopropyltriethoxysilan der Bindung an die Polyamid-Matrix dient.

Die mechanische Festigkeit des resultierenden Teilchen-Verbundwerkstoffs ergibt sich zum einen aus der internen Festigkeit der Wollastonit-Partikel und der Metallpartikel, zum anderen aus dem mechanischen Zusammenwirken der Partikel innerhalb der Polymermatrix, und schliesslich aus der Bindung der zwei verschiedenen Partikelsorten unter sich. Spratzige Metallpartikel bieten gegenüber kugeligen Partikeln aufgrund der unregelmässigeren Form höhere Festigkeit, und aufgrund der erhöhten Anzahl von Berührungspunkten zwischen den Metallpartikeln auch eine hohere elektrische Leitfahigkeit. Die Matrix des Polyamids hat aufgrund des tiefen Volumenanteils einen geringeren Anteil an der Festigkeit, der jedoch erfindungsgemass ersetzt wird durch die Bindung der Wollastonitpartikel und Metallpartikel unter sich durch die Haftvermittlungskomponenten.

Wenn man die Gewichtsanteile der einzelnen Komponenten in Volumenanteile umrechnet, mit einer Dichte von Polyamid 12 von ca. 1.14 g/cm³, von Wollastonit von ca. 2.8 kg/cm³, Bronze von ca. 8.0 g/cm³, von Messing von ca. 8.5 g/cm³, und von Kupfer von ca. 8.94 g/cm³, wobei für den Haftvermittler der Einfachheit halber die gleiche Dichte wie für Polyamid gewahlt wird, dann ergibt sich für die Zusammensetzungen 1.A bis 1.E die folgenden Anteile in Vol.%:

**Tabelle 2**

| *Zusammensetzung Nr.* | *Polymer* [Vol.%] | *Metall* [Vol.%] | *Wollastonit* [Vol.%] | *Haftvermittler* [Vol.%] | *Dichte* [g/cm³] |
|---|---|---|---|---|---|
| 1.A, 1.B (Bronze) | 37.5 | 42.8 | 12.2 | 7.5 | 4.3 |
| 1.C (Messing) | 38.5 | 41.3 | 12.5 | 7.7 | 4.4 |
| 1.D, 1.E (Kupfer) | 39.3 | 40.1 | 12.8 | 7.9 | 4.5 |

Die genannten Werkstoffe haben demnach eine Dichte von ca. 4.3-4.5 g/cm³, was mehr als der Halfte des Basismetalls entspricht, und ca. dem vierfachen des Polymermaterials.

Für die mechanischen Eigenschaften der Werkstoffe spielt das spezifische Gewicht des Metalls als erste Füllkomponente und des Wollastonits als zweite Füllkomponente keine Rolle. Verschiedene erfindungsgemasse Varianten konnen demnach verglichen werden, indem das spezifische Gewicht einer geanderten Komponente umgerechnet wird auf eine Vergleichskomponente. So konnen beispielsweise für die Zusammensetzungen 1.C bis 1.E die Gewichtsanteile von Messing bzw. Kupfer umgerechnet werden auf den theoretischen Gewichtsanteil von Bronze bei gleich bleibendem Volumen der Metallkomponente:

**Tabelle 3**

| *Zusammensetzung Nr.* | *Polymer* [Gew.%] | *Metall** [Gew.%] | *Wollastonit* [Gew.%] | *Haftvermittler* [Gew.%] |
|---|---|---|---|---|
| 1.A, 1.B (Bronze) | 10 | 80 | 8 | 2 |
| 1.C (Messing) | 10.5 | 79 | 8.4 | 2.1 |
| 1.D, 1.E (Kupfer) | 10.9 | 78.2 | 8.7 | 2.2 |

| | | | | |
|---|---|---|---|---|
| * Umgerechnet auf den theoretischen Gewichtsanteil von Bronze (8 0 g/ cm³), bei gleichem Volumenanteil | | | | |

Anstatt Polyamid PA 12 konnen als Polymerkomponente auch andere Polyamide wie beispielsweise PA 6 oder PA 66 verwendet werden. Polyphthalamid-Polymere PPA und andere Hochleistungspolymere sind ebenfalls verwendbar, wobei solche Ausführungsvarianten natürlich aufgrund der Eigenschaften der Polymerkomponente zusatzliche Vorteile bieten.

Auch andere thermoplastische Polymere sind als Polymerkomponenten einsetzbar, wie beispielsweise Polypropylen, Polymethylmethacrylat, Polycarbonat, Polystyrol, Acrylnitril-Butadien-Styrol-Copolymer, Polyamid, Polyoxymethylen, Polyester, Polyvinylchlorid, und thermoplastische Polyurethane, wobei gegebenenfalls Anpassungen an den Haftvermittlern notwendig sein konnen.

### Beispiel 2

In einem weiteren Ausführungsbeispiel wurden die Gewichtsanteile der Komponenten geandert. Die Zusammensetzungen erfindungsgemasser Verbund-Werkstoffe 2.A bis 2.E setzen sich wie folgt zusammen: 8 Gew.% Polyamid PA 12 als Polymerkomponente, 85 Gew.% Metallpulver A, B, C, D, oder E gemass Tabelle 1 als erste Füllkomponente, 5 Gew.% Wollastonit mit einer Faserlange von ca. 250 µm und einem Faserdurchmesser von ca. 15 µm als zweite Füllkomponente, und 2 Gew.% einer Haftvermittlerkomponente, bestehend aus 3-Aminopropyltriethoxysilan und 3-(2,3-epoxypropoxy)propyltri-methoxysilan in einem Gewichtsverhältnis von 1:1. Dies ergibt umgerechnet auf den Volumenanteil die in Tabelle 4 aufgeführten Zusammensetzungen:

**Tabelle 4**

| *Zusammensetzung Nr.* | *Polymer* [Vol.%] | *Metall* [Vol.%] | *Wollastonit* [Vol.%] | *Haftvermittler* [Vol.%] | *Dichte* [g/cm³] |
|---|---|---|---|---|---|
| 2.A, 2.B (Bronze) | 33.1 | 50.2 | 8.4 | 8.3 | 4.7 |
| 2.C (Messing) | 34.1 | 48.6 | 8.7 | 8.5 | 4.9 |
| 2.D, 2.E (Kupfer) | 35 | 47.4 | 8.9 | 8.7 | 5.0 |

Dies entspricht gegenüber den Zusammensetzungen 1.A bis 1.E nochmals einer Erhöhung der spezifischen Dichte um etwa 10%. Umgerechnet auf die Dichte von Bronze als Vergleich ergeben sich die Werte in Tabelle 5.

**Tabelle 5**

| *Zusammensetzung Nr.* | *Polymer* [Gew.%] | *Metall** [Gew.%] | *Wollastonit* [Gew.%] | *Haftvermittler* [Gew.%] |
|---|---|---|---|---|
| 2.A, 2.B (Bronze) | 8 | 85 | 5 | 2 |
| 2.C (Messing) | 8.4 | 84.2 | 5.3 | 2.1 |
| 2.D, 2.E (Kupfer) | 8.8 | 83.5 | 5.5 | 2.2 |

| | | | | |
|---|---|---|---|---|
| * Umgerechnet auf den theoretischen Gewichtsanteil von Bronze (8.0 g/ cm³), bei gleichem Volumenanteil | | | | |

### Beispiel 3

In noch einem weiteren Ausführungsbeispiel umfassen die Zusamnmensetzungen erfindungsgemässer Verbundwerkstoffe 3.A bis 3.E je 13 Gew.% Polyamid PA 12 als Polymerkomponente, 70 Gew.% Metallpulver A, B, C, D, oder E gemäss Tabelle 1 als erste Füllkomponente, 15 Gew.% Wollastonit mit einer Faserlänge von ca. 250 µm und einem Faserdurchmesser von ca. 15 µm als zweite Füllkomponente, und 2 Gew.% einer Haftvermittlerkomponente, bestehend aus 3-Aminopropyltriethoxysilan und 3-(2,3-epoxy-propoxy)-propyltrimethoxysilan in einem Gewichtsverhältnis von 1:1. Untenstehende Tabelle 6 enthält die Zusammensetzungen umgerechnet auf den Volumenanteil:

**Tabelle 6**

| *Zusammensetzung Nr.* | *Polymer* [Vol.%] | *Metall* [Vol.%] | *Wollastonit* [Vol.%] | *Haftvermittler* [Vol.%] | *Dichte* [g/cm³] |
|---|---|---|---|---|---|
| 3.A, 3.B (Bronze) | 41.8 | 32.1 | 19.6 | 6.4 | 3.7 |
| 3.C (Messing) | 42.6 | 30.8 | 20 | 6.6 | 3.7 |
| 3.D, 3.E (Kupfer) | 43.3 | 29.7 | 20.3 | 6.7 | 3.8 |

Entsprechend dem geringeren Metallgehalt sinkt auch die spezifische Dichte des erfindungsgemässen Werstoffes. Umgerechnet auf die Dichte von Bronze als Vergleich ergeben sich die Werte in Tabelle 7.

**Tabelle 7**

| *Zusammensetzung Nr.* | *Polymer* [Gew.%] | *Metall* [Gew.%] | *Wollastonit* [Gew.%] | *Haftvermittler* [Gew.%] |
|---|---|---|---|---|
| 3.A, 3.B (Bronze) | 13 | 70 | 15 | 2 |
| 3.C (Messing) | 13.6 | 68.7 | 15.6 | 2.1 |
| 3.D, 3.E (Kupfer) | 14 | 67.6 | 16.2 | 2.2 |

| | | | | |
|---|---|---|---|---|
| * Umgerechnet auf den theoretischen Gewichtsanteil von Bronze (8.0 g/ cm³), bei gleichem Volumenanteil | | | | |

In erfindungsgemässen Verbundwerkstoffen können anstatt Wollastonit als zweite Füllkomponente auch Glasfasern oder kalzinierte Kieselerde eingesetzt werden, oder ähnliche anorganisch-mineralische Komponenten. Ebenfalls kann Wollastonit mit anderen Faserparametern eingesetzt werden, oder Gemische verschiedener zweiter Füllkomponenten.

### Beispiele 4, 5, 6

In weiteren Testreihen wurde als Haftvermittler Maleinsäure-Anhydrid-gepropftes Polyethylen (maleic anhydride-grafted polyethylene, PEgMAH) eingesetzt. Diese zeigen etwas weniger gute Eigenschaften als die analogen Zusammensetzungen der Beispiele 1, 2 und 3, da die Bindung weniger spezifisch ist.

Die Zusammensetzung der derart erhaltenen erfindungsgemässen Verbundwerkstoffe 4.A bis 4.E lauten: 10 Gew.% Polyamid PA 12 als Polymerkomponente, 80 Gew.% Metallpulver A, B, C, D, oder E gemäss Tabelle 1 als erste Füllkomponente, 9 Gew.% Wollastonit mit einer Faserlänge von ca. 250 µm und einem Faserdurchmesser von ca. 15 µm als zweite Füllkomponente, und 1 Gew.% maleinsäure-anhydrid-gepropftes Polyethylen als Haftvermittlerkomponente.

Erfindungsgemässe Verbundwerkstoffe 5.A bis 5.E wiederum haben die folgenden Zusammensetzungen: 9 Gew.% Polyamid PA 12, 85 Gew.% Metallpulver A, B, C, D, oder E gemäss Tabelle 1, 5 Gew.% Wollastonit mit einer Faserlänge von ca. 250 µm und einem Faserdurchmesser von ca. 15 µm, und 1 Gew.% Maleinsäure-Anhydrid-gepropftes Polyethylen.

Die Zusammensetzungen erfindungsgemässer Verbundwerkstoffe 6.A bis 6.E lauten: 14 Gew.% Polyamid PA 12, 70 Gew.% Metallpulver A, B, C, D, oder E gemäss Tabelle 1, 15 Gew.% Wollastonit mit einer Faserlänge von ca. 250 µm und einem Faserdurchmesser von ca. 15 µm, und 1 Gew.% Maleinsäure-Anhydrid-gepropftes Polyethylen.

Alternativ zu Maleinsäure-Anhydrid-gepropftem Polyethylen kann auch Maleinsäure-Anhydrid-gepropftes Polypropylen (maleic anhydride-grafted polypropylene) als Haftvermittlerkomponente verwendet werden.

Erfindungsgemässe Verbundwerkstoffe können auch im Mehrkomponenten-Spritzgiessen verwendet werden. So können beispielsweise in einem Arbeitsgang Werkteile hergestellt werden, die zum Teil aus erfindungsgemässen Verbundwerkstoffen bestehen, und zum Teil aus herkömmlichen thermoplastischen Werkstoffen. So ist es beispielsweise möglich, in einem Spritzgusswerkzeug einen Grundkörper eines Steckers aus Verbundwerkstoff 1.A zu erzeugen, und anschliessend direkt anschliessend ein Dichtungselement aus einem thermoplastischen Elastomer anzuspritzen. Ebenso können in einem Arbeitsgang Komponenten hergestellt werden, bei welchen zwei elektrisch leitende Domänen aus einem erfindungsgemässen Material isolierend getrennt werden durch eine dazwischen eingespritzte Polymerdomäne.

Erfindungsgemässe Verbundwerkstoffe können auch in anderen Fertigungsverfahren eingesetzt werden, die bisher ebenfalls thermoplastischen Polymeren vorbehalten waren, beispielsweise verschiedene Blasform-Verfahren wie beispielsweise Extrusionsblasformen und Spritzblasformen.

Anstatt Kupfer bzw. kupferbasierten Legierungen können wie in den vorgenannten Beispielen auch andere metallische oder auch mineralische Verbindungen als erste Füllkomponenten eingesetzt werden. Möglich ist beispielsweise die Verwendung von Pulvern aus Stahl bzw. rostfreiem Stahl (Dichte ca. 7.4-8.0 g/cm³), Zink (ca. 7.1 g/cm³), oder Titan (ca. 4.5 g/cm³). Verschiedene Metallpulver können auch als Pulver-Mischung eingesetzt werden, um verschiedene Eigenschaften der Metalle zu kombinieren.

Die Verwendung von ferromagnetischen Verbindungen als ersten Füllstoffen, wie beispielsweise Eisen, Kobalt oder Nickel, oder deren ferromagnetischen Oxiden wie beispielsweise Magnetit und Hämatit oder Ferrite, erlauben die Herstellung von PermanentMagneten mit erhöhter mechanisches Festigkeit. Diese können günstiger hergestellt werden als gesinterte oder gegossene Magnete, und verfügen gegenüber herkömmlichen Magneten mit Polymermatrix über eine erhöhte mechanische Festigkeit.

Anstatt vergleichsweise schwerer Metalle können erfindungsgemässe Verbundwerkstoffe auch mit Leichtmetallen bzw. Leichmetalllegierungen wie beispielsweise Aluminium (ca. 2.7 g/cm³) oder Magnesium (ca. 1.7 g/cm³) realisiert werden. Die spezifische Dichte ist in diesem Fall ähnlich der Dichte der Polymer-Komponente und dem Wollastonit. Ein Verbundwerkstoff analog zu Ausführungsbeispiel 1 mit 80 Gew.% Aluminium bzw. Magnesium als erster Füllkomponente ergibt einen spritzgussfähigen erfindungsgemässen Werkstoff mit einer Dichte von 2.3 g/cm³ bzw. 1.7 g/cm³. Solche Werkstoffe in Kombination mit dem Spritzguss-Verfahren erlauben eine kostengünstige Alternative zum Aluminium-Druckguss, in Kombination mit den zusätzlichen Vorteilen des Spritzguss-Verfahrens.

Auch schwerere Metalle können für erfindungsgemässe Verbundwerkstoffe verwendet werden, wie beispielsweise Silber (ca. 10.5 g/cm³), Palladium (ca. 12.2 g/cm³), Gold (ca. 19.3 g/cm³), Wolfram (ca. 19.6 g/cm³), oder Platin (ca. 21.4 g/cm³). Solche Zusammensetzungen sind zum Beispiel geeignet für spezifische Anwendungen beispielsweise im Bereich Schmuck und Uhren, insbesondere für Teile von Uhrengehäusen, oder für militärtechnische Anwendungen.

So lässt sich beispielsweise mit einer Zusammensetzung analog zu Ausführungsbeispiel 1 mit 80 Gew.% Gold ein erfindungsgemässer Verbundwerkstoff mit einer Dichte von ca. 5.7 g/cm³ realisieren, der reinem metallischen Gold optisch sehr ähnlich ist, aber diesem in Bezug auf Verarbeitbarkeit, Gewicht und Materialkosten überlegen ist.

Analog zu Metallen und Metalllegierungen können als erste Füllkomponente oder Teil der ersten Füllkomponente auch Metalloxide eingesetzt werden, wie beispielsweise das bereits erwähnte Magnetit, oder kovalente Carbide und metallartige Carbide, wie beispielsweise Siliziumcarbid und Wolframcarbid.

Die vorliegende Erfindung ist in ihrem Umfang nicht auf die hier beschriebenen spezifischen Ausführungsformen beschränkt. Vielmehr ergeben sich für den Fachmann aus der Beschreibung zusätzlich zu den hier offenbarten Beispielen verschiedene weitere Modifikationen der vorliegenden Erfindung, die ebenfalls in den Schutzbereich der Ansprüche fallen.

## Patentansprüche

1. Verbundwerkstoff mit polymerer Matrixkomponente und teilchenförmiger Füllkomponente, **dadurch gekennzeichnet, dass** der Verbundwerkstoff umfasst:
- 20-50 Vol.% eines thermoplastischen Polymers;
- 15-60 Vol.% einer ersten teilchenförmige Füllkomponente, wobei die genannte erste Füllkomponente ausgewählt ist aus der Gruppe bestehend aus pulverförmigen Metallen, Metalllegierungen, Metalloxiden, kovalenten Carbiden, metallartigen Carbiden, oder Gemischen solcher Pulver;
- 5-30 Vol.% einer zweiten teilchenförmigen Füllkomponente, wobei die genannte zweite Füllkomponente ein anorganisches und/oder mineralisches Material in Pulverform ist; und
- 1-15 Vol.% eines Haftvermittlers.

2. Verbundwerkstoff nach Anspruch 1, **dadurch gekennzeichnet, dass** der Anteil des thermoplastischen Polymers 33-44 Vol.% beträgt, und/oder der Anteil der ersten Füllkomponente 29-51 Vol.% beträgt, und/oder der Anteil der zweiten Füllkomponente 8-21 Vol.% beträgt, und/oder der Anteil des Haftvermittlers 6-9 Vol.% beträgt.

3. Verbundwerkstoff nach Anspruch 1 oder 2, **dadurch gekennzeichnet, dass** die erste Füllkomponente ein pulverförmiges Metall enthält, ausgewählt aus der Gruppe bestehend aus Bronze, Messing, Kupfer, Eisen, Stahl, Zink, Magnesium, Aluminium, oder Gemischen solcher Pulver.

4. Verbundwerkstoff nach Anspruch 1 oder 2, **dadurch gekennzeichnet, dass** die erste Füllkomponente ein pulverförmiges Metall enthält, ausgewählt aus der Gruppe bestehend aus Gold, Silber, Platin, Palladium, Wolfram, bzw. Legierungen, die solche Metalle enthalten, oder Gemischen solcher Pulver.

5. Verbundwerkstoff nach Anspruch 1 oder 2, **dadurch gekennzeichnet, dass** die erste Füllkomponente ein ferromagnetisches Metalloxid in Pulverform enthält.

6. Verbundwerkstoff nach einem der Ansprüche 1 bis 5, **dadurch gekennzeichnet, dass** die zweite Füllkomponente ausgewählt ist aus der Gruppe bestehend aus Wollastonit, Glasfasern, kalzinierte Kieselerde, kalziniertes Kaolinit, oder Gemischen davon.

7. Verbundwerkstoff nach einem der Ansprüche 1 bis 6, **dadurch gekennzeichnet, dass** das thermoplastische Polymer mindestens ein Polyamid und/oder Polyamid-Copolymer enthält.

8. Verbundwerkstoff nach einem der Ansprüche 1 bis 7, **dadurch gekennzeichnet, dass** der Haftvermittler ein Gemisch enthält aus einem Silan mit drei Alkoxyresten und einem Alkylrest mit Aminofunktionalität und einem Silan mit drei Alkoxyresten und einem Alkylrest mit Epoxyfunktionalität.

9. Verbundwerkstoff nach Anspruch 8, **dadurch gekennzeichnet, dass** der Haftvermittler ein Gemisch enthält aus 3-Aminopropyltriethoxysilan und 3-(2,3-epoxypropoxy)-propyltrimethoxysilan.

10. Verbundwerkstoff nach einem der Ansprüche 1 bis 7, **dadurch gekennzeichnet, dass** der Haftvermittler maleinsäureanhydrid-gepropftes Polyethylen oder maleinsäureanhydrid-gepropftes Polypropylen enthält.

11. Verbundwerkstoff nach einem der vorangehenden Ansprüche, **dadurch gekennzeichnet, dass** der Verbundwerkstoff pelletisiert ist.

12. Werkstücke und Halbfabrikate, hergestellt aus einem Verbundwerkstoff nach einem der Ansprüche 1 bis 11.

13. Kit zur Herstellung eines Verbundwerkstoffs nach einem der Ansprüche 1 bis 11, umfassend die einzelnen Komponenten des Verbundwerkstoffs in getrennter Form, und/oder in gemischter aber noch nicht verarbeiteter Form.

14. Verwendung eines Verbundwerkstoffes nach einem der Ansprüche 1 bis 11 zur Herstellung von Werkstücken mit einem Spritzguss-Verfahren oder einem Blasform-Verfahren.
